# EUROPÄISCHE PATENTSCHRIFT

(11) **EP 3 872 583 B1**
(45) Veröffentlichungstag und Bekanntmachung des Hinweises auf die Patenterteilung: **19.07.2023**
(21) Anmeldenummer: 20159522.0
(22) Anmeldetag: 26.02.2020
(51) Int. Cl.: G05B 9/03

(54) **REDUNDANT AUSGELEGTES AUTOMATISIERUNGSSYSTEM**
REDUNDANTLY DESIGNED AUTOMATION SYSTEM
SYSTÈME D'AUTOMATISATION CONÇU DE MANIÈRE REDONDANTE

(43) Veröffentlichungstag der Anmeldung: 01.09.2021
(73) Patentinhaber: Siemens Aktiengesellschaft, 80333 München (DE)
(72) Erfinder: Graf, Rene, 90513 Zirndorf (DE); Steinhauer, Guido, 76744 Büchelberg (DE)
(74) Vertreter: Siemens Patent Attorneys

(56) Entgegenhaltungen:
- CN-B- 105 929 765
- GB-A- 2 477 237

## Beschreibung

Die Erfindung betrifft ein redundant ausgelegtes Automatisierungssystem mit einem ersten, einem zweiten und einem dritten Teilsystem gemäß Anspruch 1. Darüber hinaus betrifft die Erfindung ein Verfahren zum Betreiben eines redundant ausgelegten Automatisierungssystems gemäß Anspruch 9.

Im Automatisierungsumfeld werden verstärkt hochverfügbare Lösungen (H-Systeme) gefordert, welche geeignet sind, eventuell auftretende Stillstandszeiten einer technischen Anlage auf ein Minimum zu reduzieren. Vor allem in bestimmten kritischen Bereichen, wie z.B. Kraftwerken oder Chemieanlagen, wird die dort verwendete Steuerungstechnik in der Regel redundant ausgelegt, um bei Ausfall eines Systems den sicheren Betrieb der Anlage gewährleisten zu können. Dem entsprechend sind in solchen Fällen auch Peripherie-Komponenten und Netzwerke vollständig oder wenigstens teilweise redundant aufgebaut.

Redundante Steuerungen bestehen aus zwei identischen Einzelsteuerungen. Identisch bedeutet hierbei, dass diese Steuerungen die gleiche Leistungsfähigkeit und in der Regel auch die gleiche Version der darauf laufenden Software aufweisen, sowohl was die interne Software (Firmware) anbelangt als auch bezogen auf das Anwenderprogramm, das die Anlage steuert. Man spricht hierbei auch von einer System-Redundanz, da neben dem identischen Programm auch die Daten zyklisch und vollständig zwischen den beiden Teil-Systemen synchronisiert werden.

Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformation für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über eine Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst dann jeweils ihre Programmverarbeitung zeitlich synchron fortsetzen.

In der EP 2 657 797 A1 ist ein Verfahren zum Betreiben eines redundanten Automatisierungssystem offenbart, das ein Synchronisationsverfahren beinhaltet.

Aus GB2477237 A und CN105929765 A sind zwei Synchronisationsverfahren offenbart.

Bei bekannten Systemen ist die Zuordnung beider Teilsysteme als Redundanzpartner festgelegt, so dass im Ausfall eines dieser beiden Teilsysteme das andere Teilsystem allein (singulär) und somit nicht hochverfügbar laufen muss, bis das defekte System durch ein identisches System ersetzt wurde. Identisch bedeutet hierbei nicht nur, dass die Hardware identisch sein muss, sondern auch die Firmware-Version.

Aus der festen Zuordnung ergeben sich zwei Probleme:
1. Im Falle eines Defektes läuft das Gesamtsystem für die Zeit der Reparatur nur singulär und kann somit keinen Schutz vor weiteren Ausfällen bieten. Diese Zeit kann relativ lang sein, da zunächst ein Ersatzgerät aus dem Lager (Gutfall) oder vom Lieferanten (Schlechtfall) besorgt und eingebaut werden muss. Zudem muss sichergestellt sein, dass die Hardware-und Firmware-Versionen des Ersatzgerätes den unmittelbaren Austausch überhaupt erlauben.
2. Im Falle eines geplanten Umbaus liegt zwar das Ersatzteil direkt vor, aber dennoch kommt es auch hierbei zu einem, wenn auch zeitlich deutlich kürzeren, singulären Betrieb. Dabei gelten ebenfalls die Regeln der notwendigen Versionsidentität.

Das erste Problem des temporären singulären Betriebs ist bei hochverfügbaren Steuerungen mit vollständiger System-Redundanz nicht lösbar, wird aber hingenommen, da bei einem einzelnen Fehler sichergestellt ist, dass das Gesamt-System nicht vollständig ausfällt. Nur bei einem sogenannten Doppelfehler kann der Betrieb nicht mehr garantiert werden.

Bezüglich des zweiten Problem sind verschiedene Lösungswege bekannt:
1. Die Ersatzgeräte müssen zwingend die gleiche Hardware-Version wie alle im laufenden Betrieb eingesetzten Geräte haben und können somit bereits vor der Einlagerung auf die identische Firmware-Version wie die eingesetzten Geräte gebracht werden, so dass im Fehlerfall quasi blind getauscht werden kann.
2. Die Geräte sind gegenüber geringen Änderungen der Firmware-Version tolerant und können mit den neueren Ersatzgeräten dennoch in den redundanten Betrieb gehen, weil der Hersteller für diese kleinen Abweichungen die volle Kompatibilität garantiert. So kann ein Gerät mit der beispielhaften Version "3.2.4" mit Geräten in den redundanten Betrieb gehen, deren Firmware-Version sich nur in der letzten Stelle unterscheidet, also beispielsweise die Version "3.2.7".
3. Sollte die Firmware-Version sich in einer der höheren Stellen unterscheiden, ist zwar kein redundanter Betrieb möglich, aber der Wechsel des laufenden Geräts auf das Ersatzgerät ist ohne Unterbrechung der Steuerung des technischen Prozesses durchführbar. Dazu durchlaufen die beiden Geräte die übliche Sequenz, mit der sich das zuletzt gestartete System an das bereits laufende ankoppelt und sowohl das dort laufende Programm als auch die aktuellen Daten iterativ übernimmt. Bei Programm- und Daten-Gleichheit auf beiden Teilsystemen wird aber nicht in den redundanten Betrieb gewechselt, sondern stattdessen übernimmt das Gerät mit der neueren Firmware die alleinige Steuerung des Prozesses, während das bisher laufende sich abschaltet. Anschließend kann dieses auf die identische Firmware-Version des Ersatzgerätes hochgerüstet werden und mit diesem wieder in den vollständigen redundanten Betrieb gehen. Durch dieses Verfahren wird zwar die Dauer des singulären Betriebs verlängert, aber dafür muss die Steuerung nicht insgesamt abgeschaltet werden, was bei manchen technischen Prozessen (z.B. Chemie-Anlagen) auch gar nicht so einfach möglich wäre, weil der Prozess dann unkontrolliert weiterlaufen würde.

Der Erfindung liegt daher die Aufgabe zugrunde, ein redundant ausgelegtes Automatisierungssystem anzugeben, das die zuvor genannten Nachteile vermeidet.

Diese Aufgabe wird durch ein redundant ausgelegtes Automatisierungssystem gemäß Anspruch 1 gelöst. Das erfindungsgemäße Automatisierungssystem weist ein erstes Teilsystem, ein zweites Teilsystem und ein drittes Teilsystem auf.

In den Teilsystemen des Automatisierungssystems ist jeweils ein Ablaufprogramm implementiert, das in einer Laufzeit-Umgebung ausführbar ist, um Automatisierungsaufgaben zu erfüllen. Zudem ist in den Teilsystemen des Automatisierungssystems jeweils ein Datenspeicher implementiert.

Das Ablaufprogramm weist wenigstens ein erstes Teilprogramm und ein zweites Teilprogramm auf, und der Datenspeicher weist jeweils wenigstens einen ersten Teilspeicher und einen zweiten Teilspeicher auf.

Bei dem erfindungsgemäßen Automatisierungssystem ist dem ersten Teilprogramm der erste Teilspeicher und dem zweiten Teilprogramm der zweite Teilspeicher zugeordnet, und ein Synchronisationstakt des ersten Teilprogramms und des ersten Teilspeichers unterscheidet sich von einem Synchronisationstakt des zweiten Teilprograms und des zweiten Teilspeichers.

Das erfindungsgemäße Automatisierungssystem ist dazu ausgelegt, das erste Teilprogramm und den ersten Teilspeicher zwischen dem ersten Teilsystem und dem zweiten Teilsystem zu synchronisieren, und das zweite Teilprogramm und den zweiten Teilspeicher zwischen dem ersten Teilsystem und dem dritten Teilsystem zu synchronisieren.

Automatisierungssysteme werden zur Realisierung einer Automatisierung benutzt und können beispielsweise speicherprogrammierbare Steuerungen sein, beispielsweise eine SIMATIC S7-400 der Firma SIEMENS, welche eine übergeordnete Steuerungsfunktion für untergeordnete Steuerungen, beispielsweise eine SIMATIC ET 200 der Firma SIEMENS, darstellt.

In dem applikationsgranularen, redundanten Automatisierungssystem bilden ein Teilprogramm (auch als "App" bezeichnet) und der dazugehörige Teilspeicher eine Einheit. Der Teilspeicher kann von dem Teilprogramm im Rahmen dessen Ausführung benötigte (Automatisierungs-)Daten enthalten, beispielsweise Prozessdaten. Erfindungsgemäß weisen wenigstens zwei Einheiten einen voneinander verschiedenen Synchronisationstakt auf. Während eine erste Einheit (erstes Teilprogramm und erster Teilspeicher) beispielsweise mit einem Synchronisationstakt von 10 ms zwischen den beiden Teilsystemen synchronisiert wird, kann der Synchronisationstakt des zweiten Teilprogramms und des zweiten Teilspeichers beispielsweise 50 ms betragen.

Bei einer angenommenen Datenmenge pro Teilprogramm in der Größenordnung einiger 100 Bytes oder weniger Kilobytes, und einer angenommenen Gigabit-Ethernet-Kopplung zwischen den beiden Teilsystemen, können 10kB Daten in ca. 20 Mikrosekunden übertragen werden. Selbst wenn die vollständige Synchronisation aus mehreren einzelnen Schritten besteht, sind bei dem erfindungsgemäßen Automatisierungssystem Synchronisierungstakte von weniger als 100 Mikrosekunden möglich.

Die Aufteilung eines großen Programms, das nur im Ganzen synchronisiert werden kann, in mehrere kleine Teilprogramme mit definierten zugehörigen (Daten-)Speichern, bringt eine Reihe an Vorteilen. Die einzelnen Teilprogramme können mit den jeweils passenden Aktualisierungszyklen getriggert werden, da diese jeweils spezifisch sind. Durch die partielle Synchronisierung mit dementsprechend kleinen Datenmengen können deutlich hochfrequentere Teilprogramme/Apps bis hin zu feldbussynchronen Reglern redundant realisiert werden.

Die Loslösung der Redundanz von dem bisher in klassischen Steuerungen vorliegenden IEC-61131 Kontext erlaubt auch die Verwendung anderer Programmiersprachen für hochverfügbare Teilprogramme.

Des Weiteren ist das Synchronisieren des zweiten Teilsystems an das bereits laufende erste Teilsystem bei Verwendung des erfindungsgemäßen Automatisierungssystems deutlich performanter, da jedes Teilprogramm einzeln synchronisiert werden kann. Bei bekannten Automatisierungssystemen müssen hingegen alle Teilprogramme/Daten mit einem einzigen, identischen Synchronisierungstakt synchronisiert werden, was bei entsprechender Datenmenge auch fehlschlagen kann, da sich die Daten fortlaufend ändern können. Da bei dem erfindungsgemäßen Automatisierungssystem aber der Teilspeicher (bzw. die darin enthaltenen Daten) eines Teilprogramms unmittelbar mit dem Synchronisierungstakt des Teilprogramms verbunden ist, kann dieser Fehler erst gar nicht auftreten.

Der Kern der erfindungsgemäßen Automatisierungseinrichtung liegt in der fehlenden Zuordnung eines Teilsystems zu einem festen (einzigen) Redundanz-Partner, was bei der bislang bekannten vollständigen System-Redundanz zwingend der Fall sein muss. In Kombination mit der Teilprogramm-granularen Redundanz ergeben sich neue Möglichkeiten, da jede einzelnes Teilprogramm (samt dazugehörigem Teilspeicher) sein redundantes Gegenstück auf einem anderen Teilsystem finden kann.

Mittels des erfindungsgemäßen Automatisierungssytems sind Kombinationen an Synchronisations-Partnerschaften möglich, die bislang nicht möglich waren. So kann beispielsweise ein Teilsystem eine x86-Architektur haben, während das Partner-Teilsystem eine ARM-Architektur aufweist. Dass eines der beiden Teilsysteme gegebenenfalls erheblich schneller als das andere ist, spielt dabei keine Rolle. Somit ist beispielsweise eine Architektur möglich, in der ein sehr leistungsfähiges Teilsystem der Synchronisations-Partner für mehrere schwächere Teilsysteme ist.

Die Software- bzw. Firmware-Version der beiden Synchronisations-Partner kann unterschiedlich sein, sofern der Ablauf der Teilprogramme unter beiden Versionen gewährleistet ist.

Die einzelnen Teilprogramme müssen nicht in einem festen Zyklus laufen, sondern können auch event-basiert getriggert werden, z.B. durch Änderung einer Variablen durch ein anderes Teilprogramm. Die Ausführungsumgebung der Teilprogramme (die Laufzeit-Umgebung) liegt dabei die Information vor, welcher Teilspeicher bzw. welche Daten zu dem event-getriggerten Teilprogramm gehören. Damit können diese Daten bzw. diese Teilspeicher vor dem Starten des dazugehörigen Teilprogramms entsprechend zwischen den beiden Teilsystemen synchronisiert werden. Verwendet man hierzu eine separate Trigger-Variable, kann sich auch die Konsistenz aller anderen Variablen sicherstellen lassen, indem diese Trigger-Variable immer als letzte von dem anderen Teilprogramm geschrieben wird. Zusätzlich kann die Anzahl der Events erheblich reduziert werden, da nicht für jede einzelne Variablenänderung ein Trigger erzeugt wird musss, sondern nur für diese eine. Dieses Konzept ist an den Mechanismus der IEC-61499 angelehnt.

Die Teilsysteme müssen nicht zwingend innerhalb einer einzigen technischen Anlage angeordnet sein. Vielmehr kann eines oder mehrere technische Systeme auch cloudbasiert sein. Dies bedeutet, dass das oder die Teilsysteme in einem Rechnernetzwerk mit onlinebasierten Speicher- und Serverdiensten, welches üblicherweise auch Cloud (engl. Wolke) oder Cloud-Plattform bezeichnet werden, implementiert sind. Die in der Cloud gespeicherten Daten sind online zugänglich, sodass die anderen Teilsysteme des Automatisierungssystems über das Internet Zugriff auf das oder die cloudbasierten Teilsysteme haben.

Bei einer vorteilhaften Weiterbildung der Erfindung sind jeweils ein Teilprogramm und ein dem Teilprogramm zugeordneter Teilspeicher in einem computerimplementierten Container enthalten. Unterstützt die eingesetzte Laufzeit-Umgebung die Kapselung einzelner Applikationen in Containern, so können auch redundante Teilprogramme gekapselt werden, da die Daten bzw. die zugeordneten Teilspeicher dieser Teilprogramme auch bei der Verwendung von Containern zentral abgelegt und verwaltet werden. Die Verwendung von Containern vereinfacht die eindeutige Zuordnung von Teilprogramm und Teilspeicher bzw. Daten, da die Container eine definierte Grenze um beides ziehen.

Bei einer bevorzugten Weiterbildung der Erfindung sind das erste Teilsystem und das zweite Teilsystem mittels einer expliziten Synchronisationsverbindung miteinander verbunden, während das erste Teilsystem und das dritte Teilsystem mittels einer impliziten Synchronisationsverbindung miteinander verbunden sind. Dabei wird unter einer expliziten Synchronisationsverbindung eine Datenverbindung verstanden, die ausschließlich für den Datenverkehr der Synchronisierungsmechanismen zwischen den beiden Teilsystemen verwendet wird. Da hiermit kein größeres Netzwerk aufgespannt werden muss, sondern nur eine Punkt-zu-Punkt-Verbindung, werden hier die Daten meist auf der untersten und damit schnellstmöglichen Ebene des Netzwerks übertragen (Schicht 2 im OSI-Schichtenmodell). Unter einer impliziten Synchronisationsverbindung wird eine Datenverbindung verstanden, die nicht ausschließlich für den Datenverkehr der Synchronisierungsmechanismen zwischen den beiden Teilsystemen verwendet wird. Vorteil ist hierbei, dass der Systemaufbau einfacher gestaltet werden kann. Durch die Verwendung verschiedener Synchronisationsmechanismen kann der Vorteil, der aus der variablen, teilprogrammgranularen Zuordnung der einzelnen Teilsysteme erwächst, weiter verstärkt werden, da je nach Anforderung der einzelnen Teilprogramme zwischen verschiedenen Synchronisationsmechanismen gewählt werden kann. Diese Wahl muss nicht statisch sein, sondern kann - beispielsweise bei (zeitweiligen) Kapazitätsbeschränkungen einzelner Teilsysteme - dynamisch gewählt werden.

Das erste, zweite und dritte Teilsystem können, alternativ oder zusätzlich, mittels einer multiplen, expliziten Synchronisationsverbindung miteinander verbunden sein. Die multiple explizite Synchronisationsverbindung stellt dabei eine Erweiterung des Konzepts der expliziten Synchronisationsverbindung dar. Explizit bedeutet, dass die Synchronisationsverbindung ausschließlich zwischen den beteiligten Teilsystemen besteht (und nicht zu weiteren Komponenten einer technischen Anlage). Multipel bedeutet, dass mehr als zwei Teilsysteme miteinander explizit verbunden sind. Bevorzugt umfasst die multiple, explizite Synchronisationsverbindung einen Netzwerkswitch, der die Koordination der Datenübertragung zwischen den einzelnen Teilsystemen übernimmt. Die Datenübertragung basiert dabei auf dem Ethernet-Protokoll. Diese Weiterbildung ermöglicht einen effizienten Datenaustausch zwecks Synchronisierung der einzelnen Teilprogramme/Teilspeicher zwischen den einzelnen Teilsystemen. Dabei kann auf bewährte Standardtechnologie zurückgegriffen werden.

Im Rahmen einer bevorzugten Weiterbildung des Automatisierungssystems weist das Ablaufprogramm zusätzlich wenigstens ein drittes Teilprogramm auf. Entsprechend weist der Datenspeicher zusätzlich wenigstens einen dritten Teilspeicher auf. Das Automatisierungssystem ist dabei dazu ausgelegt, das dritte Teilprogramm und den dritten Teilspeicher zwischen dem zweiten Teilsystem und dem dritten Teilsystem zu synchronisieren. Durch die variable Zuordnung von Synchronisations-partner auf teilprogrammgranularer Ebene kann sehr exakt auf die spezifischen Synchronisationsanforderungen der einzelnen Teilprogramme/Teilspeicher eingegangen werden.

Ganz besonders bevorzugt sind die einzelnen Teilsysteme dazu ausgebildet, einen jeweiligen Synchronisationspartner zur Synchronisierung eines Teilprogramms und eines dazugehörigen Teilspeichers anhand eines Gütekriteriums dynamisch zu bestimmen. Die Verbindung zu anderen Teilsystemen kann insbesondere hinsichtlich Durchsatz und Latenz unterschiedlich ausgebildet sein und sich verändern. Ein Teilsystem kann automatisiert mittels des Gütekriteriums bestimmen, welches andere Teilsystem aktuell für eine bestimmte Synchronisationsaufgabe am geeignetsten ist. Insbesondere nach einem Ausfall eines Teilsystems kann sich das verbliebene, noch funktionierende Teilsystem schnell und effizient andere Synchronisationspartner suchen, so dass die Zeit des nicht redundanten Betriebes signifikant verringert kann.

Die Aufgabe wird zudem gelöst durch ein Verfahren gemäß Anspruch 9. Bei dem Verfahren zum Betreiben eines redundant ausgelegten Automatisierungssystems, welches ein erstes Teilsystem, ein zweites Teilsystem und ein drittes Teilsystem aufweist, ist in den Teilsystemen des Automatisierungssystems jeweils ein Ablaufprogramm implementiert, das in einer Laufzeit-Umgebung ausführbar ist, um Automatisierungsaufgaben zu erfüllen. Dabei ist in den Teilsystemen des Automatisierungssystems jeweils ein Datenspeicher implementiert.

Das Ablaufprogramm weist wenigstens ein erstes Teilprogramm und ein zweites Teilprogramm auf, wobei der Datenspeicher jeweils wenigstens einen ersten Teilspeicher und einen zweiten Teilspeicher aufweist.

Das erste Teilprogramm und der erste Teilspeicher werden mit einem ersten Synchronisationstakt zwischen dem ersten Teilsystem und dem zweiten Teilsystem synchronisiert, und das zweite Teilprogramm und der zweite Teilspeicher werden mit einem zweiten Synchronisationstakt zwischen dem ersten Teilsystem und dem dritten Teilsystem synchronisiert, wobei sich der erste Synchronisationstakt und der zweite Synchronisationstakt voneinander unterscheiden.

Bevorzugt ist auch im Rahmen des Verfahrens - analog zu dem Automatisierungssystem - jeweils ein Teilprogramm und ein dem Teilprogramm zugeordneter Teilspeicher in einem computerimplementierten Container enthalten.

Im Rahmen einer bevorzugten Weiterbildung des Verfahrens sind das erste Teilsystem und das zweite Teilsystem mittels einer expliziten und das zweite Teilsystem und das dritte Teilsystem mittels einer impliziten Synchronisationsverbindung miteinander verbunden.

Besonders bevorzugt sind das erste Teilsystem, das zweite Teilsystem und das dritte Teilsystem mittels einer multiplen, expliziten Synchronisationsverbindung miteinander verbunden.

Die multiple, explizite Synchronisationsverbindung umfasst bevorzugt wenigstens einen Netzwerkswitch und basiert auf einem Ethernet-Protokoll.

Bei einer vorteilhaften Weiterbildung des erfindungsgemäßen Verfahrens weist das Ablaufprogramm zusätzlich wenigstens ein drittes Teilprogramm auf, und der Datenspeicher weist zusätzlich wenigstens einen dritten Teilspeicher auf, wobei das Automatisierungssystem das dritte Teilprogramm und den dritten Teilspeicher zwischen dem zweiten Teilsystem und dem dritten Teilsystem synchronisiert.

Die einzelnen Teilsysteme können dabei dazu ausgebildet sein, einen jeweiligen Synchronisationspartner zur Synchronisierung eines Teilprogramms und eines dazugehörigen Teilspeichers anhand eines Gütekriteriums dynamisch zu bestimmen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein erstes redundantes Automatisierungssystem; und
- FIG 2: ein zweites redundantes Automatisierungssystem.

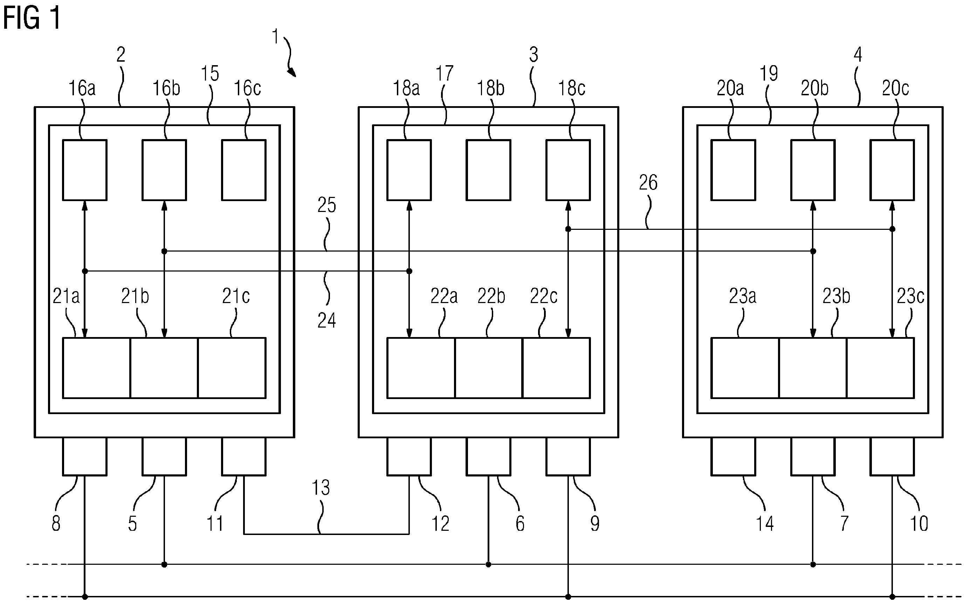

In FIG 1 ist ein redundant ausgebildetes Automatisierungssystem 1 dargestellt. Das Automatisierungssystem 1 kann beispielsweise bei einer prozesstechnischen Anlage eingesetzt werden und weist ein erstes Teilsystem 2, ein zweites Teilsystem 3 und ein drittes Teilsystem 4 auf. Das erste Teilsystem 2 weist eine erste Netzwerkschnittstelle 5, das zweite Teilsystem 3 eine zweite Netzwerkschnittstelle 6 und das dritte Teilsystem 4 eine dritte Netzwerkschnittstelle 7 auf, über die die Teilsysteme 2, 3, 4 mit externen Geräten (nicht dargestellt) kommunizieren können.Dabei kann das redundante Automatisierungssystem 1 nach außen hin als nur ein einziger Netzwerkteilnehmer oder als drei getrennte erscheinen - abhängig von der jeweiligen Implementierung.

Das erste Teilsystem 2 weist zudem eine erste Busschnittstelle 8, das zweite Teilsystem 3 eine zweite Busschnittstelle 9 und das dritte Teilsystem 4 eine dritte Busschnittstelle 10 auf. Bei dem Bus kann es sich um einen Profinet-Feldbus handeln. An die Busschnittstellen 8, 9, 10 können Peripherie-Komponenten wie Sensoren oder Aktoren angeschlossen sein, um entsprechende Daten senden und empfangen zu können. In der Regel werden die Peripherie-Komponenten parallel an die Busschnittstellen 8, 9, 10 angeschlossen (wie dargestellt), damit bei Ausfall eines der Teilsysteme 2, 3, 4 das weiterlaufende Teilsystem 2, 3, 4 alle notwendigen Daten erhält. Teilweise können aber Peripherie-Komponenten auch nur an einem oder zwei der drei Teilsysteme 2, 3, 4 angeschlossen sein, weil sie beispielsweise nur für dieses Teilsystem 2, 3, 4 relevant sind - wie z.B. der Temperatursensor in einem Schaltschrank dieses Teilsystems 2, 3, 4.

Darüber hinaus weist das erste Teilsystem 2 eine erste Synchronisationsschnittstelle 11 und das zweite Teilsystem 3 eine zweite Synchronisationsschnittstelle 12 auf. Die beiden Synchronisationsschnittstellen 11, 12 werden ausschließlich für den Datenverkehr im Rahmen einer expliziten Synchronisation der beiden Teilsysteme 2, 3 verwendet und sind mittels einer entsprechenden Verbindung 13 miteinander verbunden. Es handelt sich somit um eine reine Punkt-zu-Punkt-Verbindung, auf der Daten meist auf der untersten und damit schnellstmöglichen Ebene übertragen werden (d.h. in der Schicht 2 des OSI-Schichtenmodells). Das dritte Teilsystem 4 weist zwar eine dritte Synchronisationsschnittstelle 14 auf. Diese ist aber im vorliegenden Ausführungsbeispiel mit keiner der beiden weiteren Synchronisationsschnittstellen 11, 12 verbunden, worauf die Erfindung aber keinesfalls beschränkt ist.

In einer Laufzeitumgebung 15 des ersten Teilsystems 2 werden drei Teilprogramme 16a, 16b, 16c ausgeführt. Die einzelnen Teilprogramme 11a, 11b, 11c können dabei verschiedene Automatisierungsaufgaben abarbeiten, beispielsweise eine Regelung oder eine Überwachung von mit dem ersten Teilsystem 2 über die Busschnittstelle 8 verbundenen Sensoren und/oder Aktoren. Analog dazu werden in einer Laufzeitumgebung 17 des zweiten Teilsystems 3 drei Teilprogramme 18a, 18b, 18c, und in einer Laufzeitumgebung 19 des dritten Teilsystems 4 drei Teilprogramme 20a, 20b, 20c ausgeführt.

In dem ersten Teilsystem 2 ist weiterhin ein Speicher implementiert, der drei Teilspeicher 21a, 21b, 21c umfasst. Jeder der Teilspeicher 21a, 21b, 21c ist einem der Teilprogramme 16a, 16b, 16c des ersten Teilsystems 2 zugeordnet. In den Teilspeichern 21a, 21b, 21c befinden sich Daten, die jeweils von an das erste Teilsystem 2 über die Busschnittstelle 8 angeschlossenen Peripherie-Komponenten oder von dem zugeordneten Teilprogramm 16a, 16b, 16c stammen. Analog dazu weist das zweite Teilsystem 3 drei Teilspeicher 22a, 22b, 22c, und das dritte Teilsystem 4 drei Teilspeicher 23a, 23b, 23c auf, die analog ausgebildet sind.

In den Laufzeitumgebungen 15, 17, 19 sind die Zuordnungen der einzelnen Teilprogramme 16a, 16b, 16c, 18a, 18b, 18c, 20a, 20b, 20c zu den jeweiligen Teilspeichern 21a, 21b, 21c, 22a, 22b, 22c, 23a, 23b, 23c hinterlegt. Die folgenden Teilprogramme 16a, 16b, 16c, 18a, 18b, 18c, 20a, 20b, 20c werden zusammen mit den dazugehörigen Teilspeichern 21a, 21b, 21c, 22a, 22b, 22c, 23a, 23b, 23c zwischen den im Folgenden beschriebenen Teilsystemen 2, 3, 4 synchronisiert (aus Übersichtlichkeitsgründen werden im Folgenden nur die Teilprogramme aufgeführt):
Das erste Teilprogramm 16a des ersten Teilsystems 2 wird mit dem ersten Teilprogramm 18a des zweiten Teilsystems 3 synchronisiert (d.h. die beiden Teilprogramme 16a, 18a sind identisch). Für diese Kombination wird ein erster logischer Synchronisationskanal 24 definiert. Der Synchronisationstakt des ersten Synchronisationskanals 24 beträgt beispielsweise 10 Millisekunden.

Das zweite Teilprogramm 16b des ersten Teilsystems 2 wird mit dem zweiten Teilprogramm 20b des dritten Teilsystems 4 synchronisiert (d.h. die beiden Teilprogramme 16b, 20b sind identisch). Für diese Kombination wird ein zweiter logischer Synchronisationskanal 25 definiert. Der Synchronisationstakt des zweiten Synchronisationskanals 25 beträgt beispielsweise 50 Millisekunden.

Das dritte Teilprogramm 18c des zweiten Teilsystems 3 wird mit dem dritten Teilprogramm 20c des dritten Teilsystems 4 synchronisiert (d.h. die beiden Teilprogramme 18c, 20c sind identisch). Für diese Kombination wird ein dritter logischer Synchronisationskanal 26 definiert. Der Synchronisationstakt des dritten Synchronisationskanals 26 beträgt beispielsweise 30 Millisekunden.

Das dritte Teilprogramm 16a des ersten Teilsystems 2, das zweite Teilprogramm 18b des zweiten Teilsystems 3 und das erste Teilprogramm 20a des dritten Teilsystems 4 werden nicht synchronisiert, sondern werden als singuläre Applikationen jeweils nur von einer Laufzeitumgebung 15, 17, 19 bearbeitet. Eine Synchronisation kann aber durch das variable Automatisierungssystem 1 jederzeit aufgenommen werden.

Während das erste Teilsystem 2 und das zweite Teilsystem 3 mittels der expliziten Synchronisationsverbindung 13 miteinander verbunden sind, besteht zwischen dem ersten Teilsystem 2 und dem dritten Teilsystem 4 sowie zwischen dem zweiten Teilsystem 3 und dem dritten Teilsystem 4 eine implizite Synchronisationsverbindung über die Netzwerkschnittstellen 5, 6, 7. Durch eine Verwendung des beschriebenen Automatisierungssystem 1 ergeben sich neue Möglichkeiten, da jede einzelnes Teilprogramm 16a, 16b, 16c, 18a, 18b, 18c, 20a, 20b, 20c sein redundantes Gegenstück auf einem anderen Teilsystem 2, 3, 4 finden kann, sofern die Qualität der Synchronisationsverbindung zwischen den jeweiligen Teilsystemen 2, 3, 4 ausreichend hoch ist. Hierzu ist das Automatisierungssystem 1 in der Lage, eines oder mehrere Gütekriterien der Synchronisationsverbindungen zu ermitteln und daraus einen passenden Synchronisationspartner zur Synchronisierung eines bestimmten Teilprogramms 16a, 16b, 16c, 18a, 18b, 18c, 20a, 20b, 20c dynamisch zu bestimmen.

Die Zuordnung der Synchronisationspartner ist frei wählbar und kann nicht nur beim Starten eines Teilprogramms 16a, 16b, 16c, 18a, 18b, 18c, 20a, 20b, 20c dynamisch erfolgen, sondern insbesondere auch im Falle des Ausfalls eines der beiden Synchronisations-Partner, so dass die Zeit des singulären Betriebs auf die Zeit des Ankoppelns des neu ausgewählten Partners reduziert werden kann.

Ebenso ist damit ein geplanter Umzug eines redundanten Teilprogramms 16a, 16b, 16c, 18a, 18b, 18c, 20a, 20b, 20c auf andere Teilsysteme 2, 3, 4 möglich, um diese z.B. für ein Firmware-Update herunterfahren und neu starten zu können. Dazu wird dem Teilsystem 2, 3, 4 , das den weiterlaufenden Teil des zu synchronisierenden Teilprogramms 16a, 16b, 16c, 18a, 18b, 18c, 20a, 20b, 20c bearbeitet, aufgetragen, sich durch die Bestimmung von Gütekriterien einen neuen Synchronisations-Partner für alle auf ihm laufenden Teilprogramme 16a, 16b, 16c, 18a, 18b, 18c, 20a, 20b, 20c zu suchen. Anschließend können zwei mögliche Wege bestritten werden:
1. Die bisherige Instanz (d.h. der Ablauf des Teilprogramms 16a, 16b, 16c, 18a, 18b, 18c, 20a, 20b, 20c) auf dem nicht weiterlaufenden Teilsystem 2, 3, 4, wird gestoppt und die neue (redundante) Instanz auf dem neuen Synchronisations-Partner gestartet. Damit ist auch hier die Zeit des singulären Betriebs nicht länger als die Zeit zum Ankoppeln.
2. Da die Instanzen sich in einer eindeutigen Master-Slave-Rolle befinden, wird zunächst das Teilprogramm 16a, 16b, 16c, 18a, 18b, 18c, 20a, 20b, 20c auf dem weiterlaufenden Teilsystem 2, 3, 4 zum Master erklärt, so dass definitiv der Slave gestoppt wird.

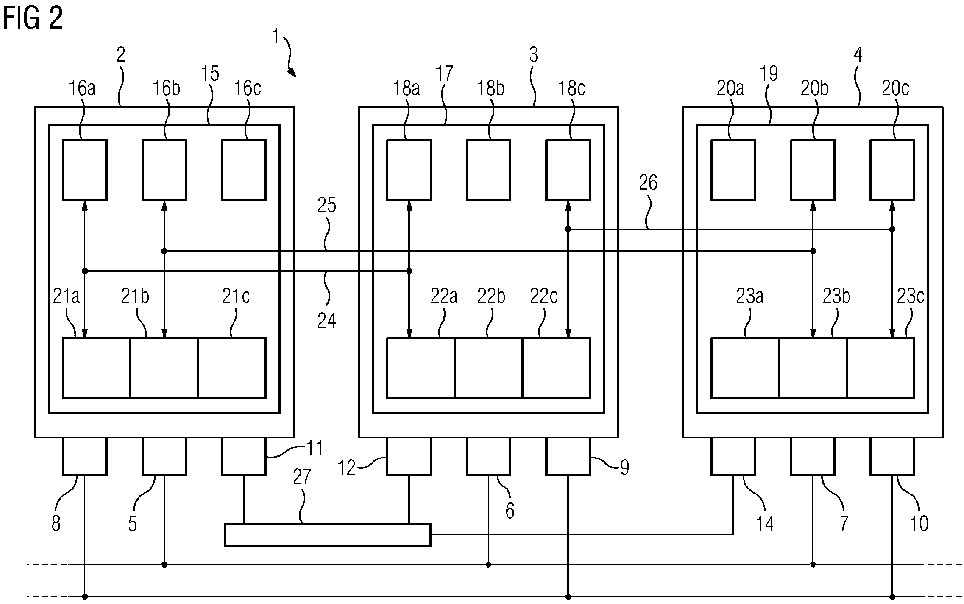

Generell kann ein Teilsystem 2, 3, 4 für ein spezifisches Teilprogramm 16a, 16b, 16c, 18a, 18b, 18c, 20a, 20b, 20c auch mehrere Synchronisations-Partner haben, die Zahl ist nicht auf zwei Synchronisations-Partner (wie in FIG 1 und FIG 2 gezeigt) beschränkt. Eine dreifache Redundanz ist beispielsweise für den Fall des geplanten Abschaltens eines der Teilsysteme 2, 3, 4 von Bedeutung, da hierzu zunächst von zweifacher auf dreifache Redundanz erweitert wird, bevor das betreffende Teilsystem 2, 3, 4 abgeschaltet wird. Somit kann ein singulärer Betrieb eine Teilsystems 2, 3, 4 nahezu ausgeschlossen werden.

In FIG 2 ist im Wesentlich dasselbe Automatisierungssystem 1 wie in FIG 1 gezeigt, weshalb im Folgenden nur auf die Unterschiede eingegangen wird. Die erste Synchronisationsschnittstelle 11 des ersten Teilsystems 2, die zweite Synchronisationsschnittstelle 12 des zweiten Teilsystems 3 und die dritte Synchronisationsschnittstelle 14 des dritten Teilsystems 4 sind mittels einer multiplen, expliziten Synchronisationsverbindung miteinander verbunden. Diese multiple, explizite Synchronisationsverbindung umfasst einen Netzwerkswitch 27. Der Vorteil liegt hierbei darin, dass auch Teilprogramme 16a, 16b, 16c, 18a, 18b, 18c, 20a, 20b, 20c, die einen hohen Synchronisationstakt benötigen, beliebig auf die Teilsysteme 2, 3, 4 verteilt und bei Bedarf umgezogen werden können.

Die multiple, explizite Synchronisationsverbindung basiert auf einem Ethernet-Protokoll (wahlweise mit Kupfer oder Lichtwellenleiter als physischem Medium). Zur Kennzeichnung der einzelnen Teilsysteme 2, 3, 4 innerhalb der Ethernet-Verbindung werden VLAN-Tags verwendet (VLAN = Virtual Local Area Network). Diese sind im Ethernet-Standard (IEEE802.3) als Teil des Headers definiert und werden genutzt, um auf einem einzigen physikalischen Netzwerk mehrere virtuelle Netzwerke zu betreiben, die aber auf MAC-Ebene voneinander getrennt sind. Vorliegend sind die VLAN-Tags den jeweiligen Synchronisationsschnittstellen 11, 12, 14 der Teilsysteme 2, 3, 4 zugewiesen. Der Netzwerkswitch 27 wertet die VLAN-Tags noch vor der MAC-Adresse des jeweiligen Teilsystems 2, 3, 4 aus, um Daten ohne Zeitverzug innerhalb dieses virtuellen Netzes weiterleiten zu können. Damit ist auch die vollständige Unabhängigkeit von der Hardware gegeben, da die MAC-Adressen der Teilsysteme 2, 3, 4 für den Datentransport keine Rolle spielen.

Wird jedem Teilsystem 2, 3, 4 eine eindeutige Nummer zugeordnet, kann diese auch, gewandelt in einen VLAN-Tag, in das zu einem Teilprogramm 16a, 16b, 16c, 18a, 18b, 18c, 20a, 20b, 20c dazugehörige Synchronisationstelegramm integriert werden, so dass das Teilsystem 2, 3, 4 ein Datenpaket wiederum quasi blind abschicken kann. Der Netzwerkswitch 27 wertet den VLAN-Tag aus und dirigiert das Datenpaket zu dem richtigen Teilsystem 2, 3, 4, das für dieses Teilprogramm 16a, 16b, 16c, 18a, 18b, 18c, 20a, 20b, 20c den Synchronisations-Partner stellt. Somit kann die eigentliche Hardware im Fehlerfall auch problemlos getauscht werden.

## Patentansprüche

1. Redundant ausgelegtes Automatisierungssystem (1), welches wenigstens ein erstes Teilsystem (2), wenigstens ein zweites Teilsystem (3) und wenigstens ein drittes Teilsystem (4) aufweist,
wobei in den Teilsystemen (2, 3, 4) des Automatisierungssystems (1) jeweils ein Ablaufprogramm implementiert ist, das in einer Laufzeitumgebung (15, 17, 19) ausführbar ist, um Automatisierungsaufgaben zu erfüllen,
und wobei in den Teilsystemen (2, 3, 4) des Automatisierungssystems (1) jeweils ein Datenspeicher implementiert ist,
wobei das Ablaufprogramm wenigstens ein erstes Teilprogramm (16a, 16b, 16c, 18a, 18b, 18c, 20a, 20b, 20c) und ein zweites Teilprogramm (16a, 16b, 16c, 18a, 18b, 18c, 20a, 20b, 20c) aufweist,
und wobei der Datenspeicher jeweils wenigstens einen ersten Teilspeicher (21a, 21b, 21c, 22a, 22b, 22c, 23a, 23b, 23c) und einen zweiten Teilspeicher (21a, 21b, 21c, 22a, 22b, 22c, 23a, 23b, 23c) aufweist, wobei
dem ersten Teilprogramm (16a, 16b, 16c, 18a, 18b, 18c, 20a, 20b, 20c) der erste Teilspeicher (21a, 21b, 21c, 22a, 22b, 22c, 23a, 23b, 23c) und dem zweiten Teilprogramm (16a, 16b, 16c, 18a, 18b, 18c, 20a, 20b, 20c) der zweite Teilspeicher (21a, 21b, 21c, 22a, 22b, 22c, 23a, 23b, 23c) zugeordnet ist, und wobei das Automatisierungssystem dazu ausgelegt ist, das erste Teilprogramm (16a, 16b, 16c, 18a, 18b, 18c, 20a, 20b, 20c) des ersten Teilsystems (2) mit dem ersten Teilprogramm (16a, 16b, 16c, 18a, 18b, 18c, 20a, 20b, 20c) des zweiten Teilsystem (3) mit einem ersten Synchronisationstakt zu synchronisieren, und den ersten Teilspeicher (21a, 21b, 21c, 22a, 22b, 22c, 23a, 23b, 23c) des ersten Teilsystems (2) mit dem ersten Teilspeicher (21a, 21b, 21c, 22a, 22b, 22c, 23a, 23b, 23c) des zweiten Teilsystems (3) mit dem ersten Synchronisationstakt zu synchronisieren, und das zweite Teilprogramm (16a, 16b, 16c, 18a, 18b, 18c, 20a, 20b, 20c) des ersten Teilsystems (2) mit dem zweiten Teilprogramm (16a, 16b, 16c, 18a, 18b, 18c, 20a, 20b, 20c) des dritten Teilsystems (4) mit einem zweiten Synchronisationstakt zu synchronisieren, und den zweiten Teilspeicher (21a, 21b, 21c, 22a, 22b, 22c, 23a, 23b, 23c) des ersten Teilsystems (2) mit dem zweiten Teilspeicher (21a, 21b, 21c, 22a, 22b, 22c, 23a, 23b, 23c) des dritten Teilsystems (4) mit dem zweiten Synchronisationstakt zu synchronisieren, wobei sich der erste Synchronisationstakt und der zweite Synchronisationstakt voneinander unterscheiden.

2. Redundant ausgelegtes Automatisierungssystem (1) nach Anspruch 1, bei dem jeweils ein Teilprogramm (16a, 16b, 16c, 18a, 18b, 18c, 20a, 20b, 20c) und ein dem Teilprogramm (16a, 16b, 16c, 18a, 18b, 18c, 20a, 20b, 20c) zugeordneter Teilspeicher (21a, 21b, 21c, 22a, 22b, 22c, 23a, 23b, 23c) in einem computerimplementierten Container enthalten sind.

3. Redundant ausgelegtes Automatisierungssystem (1) nach Anspruch 1 oder 2, bei dem das erste Teilsystem (2, 3, 4) und das zweite Teilsystem (2, 3, 4) mittels einer expliziten Synchronisationsverbindung, die eine Datenverbindung ist, die ausschließlich für einen Datenverkehr zwischen den beiden Teilsystemen verwendet wird, und das erste Teilsystem (2, 3, 4) und das zweite Teilsystem (2, 3, 4) mittels einer impliziten Synchronisationsverbindung, die eine Datenverbindung ist, die nicht ausschließlich für einen Datenverkehr zwischen den beiden Teilsystemen verwendet wird, miteinander verbunden sind.

4. Redundant ausgelegtes Automatisierungssystem (1) nach einem der vorangegangenen Ansprüche, bei dem das erste Teilsystem (2, 3, 4), das zweite Teilsystem (2, 3, 4) und das dritte Teilsystem (2, 3, 4) mittels einer multiplen, expliziten Synchronisationsverbindung miteinander verbunden sind.

5. Redundant ausgelegtes Automatisierungssystem (1) nach Anspruch 4, bei dem die multiple, explizite Synchronisationsverbindung wenigstens einen Netzwerkswitch (27) umfasst und auf einem Ethernet-Protokoll basiert.

6. Redundant ausgelegtes Automatisierungssystem (1) nach einem der vorangegangenen Ansprüche, bei dem das Ablaufprogramm zusätzlich wenigstens ein drittes Teilprogramm (16a, 16b, 16c, 18a, 18b, 18c, 20a, 20b, 20c) aufweist, und bei dem der Datenspeicher zusätzlich wenigstens einen dritten Teilspeicher (21a, 21b, 21c, 22a, 22b, 22c, 23a, 23b, 23c) aufweist, wobei das Automatisierungssystem dazu ausgelegt ist, das dritte Teilprogramm (16a, 16b, 16c, 18a, 18b, 18c, 20a, 20b, 20c) und den dritten Teilspeicher (21a, 21b, 21c, 22a, 22b, 22c, 23a, 23b, 23c) zwischen dem zweiten Teilsystem (2, 3, 4) und dem dritten Teilsystem (2, 3, 4) zu synchronisieren.

7. Redundant ausgelegtes Automatisierungssystem (1) nach einem der vorangegangenen Ansprüche, bei dem wenigstens eines der Teilsysteme (2, 3, 4) cloudbasiert ist.

8. Redundant ausgelegtes Automatisierungssystem (1) nach einem der vorangegangenen Ansprüche, bei dem die einzelnen Teilsysteme (2, 3, 4) dazu ausgebildet sind, einen jeweiligen Synchronisationspartner zur Synchronisierung eines Teilprogramms und eines dazugehörigen Teilspeichers (21a, 21b, 21c, 22a, 22b, 22c, 23a, 23b, 23c) anhand eines Gütekriteriums variabel zu bestimmen.

9. Verfahren zum Betreiben eines redundant ausgelegten Automatisierungssystems (1), welches wenigstens ein erstes Teilsystem (2, 3, 4), wenigstens ein zweites Teilsystem (2, 3, 4) und wenigstens ein drittes Teilsystem (2, 3, 4) aufweist,
wobei in den Teilsystemen (2, 3, 4) des Automatisierungssystems (1) jeweils ein Ablaufprogramm implementiert ist, das in einer Laufzeitumgebung (15, 17, 19) ausführbar ist, um Automatisierungsaufgaben zu erfüllen,
und wobei in den Teilsystemen (2, 3, 4) des Automatisierungssystems (1) jeweils ein Datenspeicher implementiert ist, wobei das Ablaufprogramm wenigstens ein erstes Teilprogramm (16a, 16b, 16c, 18a, 18b, 18c, 20a, 20b, 20c) und ein zweites Teilprogramm (16a, 16b, 16c, 18a, 18b, 18c, 20a, 20b, 20c) aufweist,
und wobei der Datenspeicher jeweils wenigstens einen ersten Teilspeicher (21a, 21b, 21c, 22a, 22b, 22c, 23a, 23b, 23c) und einen zweiten Teilspeicher (21a, 21b, 21c, 22a, 22b, 22c, 23a, 23b, 23c) aufweist,
wobei das erste Teilprogramm (16a, 16b, 16c, 18a, 18b, 18c, 20a, 20b, 20c) des ersten Teilsystems (2) mit dem ersten Teilproramm (16a, 16b, 16c, 18a, 18b, 18c, 20a, 20b, 20c) des zweiten Teilsystems (3) mit einem ersten Synchronisationstakt synchronisiert wird, und der erste Teilspeicher (21a, 21b, 21c, 22a, 22b, 22c, 23a, 23b, 23c) des ersten Teilsystems (2) mit dem ersten Teilspeicher (21a, 21b, 21c, 22a, 22b, 22c, 23a, 23b, 23c) des zweiten Teilsystems (3) mit dem ersten Synchronisationstakt synchronisiert wird, und das zweite Teilprogramm (16a, 16b, 16c, 18a, 18b, 18c, 20a, 20b, 20c) des ersten Teilsystems (2) mit dem zweiten Teilprogramm (16a, 16b, 16c, 18a, 18b, 18c, 20a, 20b, 20c) des dritten Teilsystems (4) mit einem zweiten Synchronisationstakt synchronisiert wird, und der zweite Teilspeicher (21a, 21b, 21c, 22a, 22b, 22c, 23a, 23b, 23c) des ersten Teilsystems (2) mit dem zweiten Teilspeicher ((21a, 21b, 21c, 22a, 22b, 22c, 23a, 23b, 23c) des dritten Teilsystems (4) mit dem zweiten Synchronisationstakt synchronisiert wird, wobei sich der erste Synchronisationstakt und der zweite Synchronisationstakt voneinander unterscheiden.

10. Verfahren nach Anspruch 9, bei dem jeweils ein Teilprogramm (16a, 16b, 16c, 18a, 18b, 18c, 20a, 20b, 20c) und ein dem Teilprogramm (16a, 16b, 16c, 18a, 18b, 18c, 20a, 20b, 20c) zugeordneter Teilspeicher (21a, 21b, 21c, 22a, 22b, 22c, 23a, 23b, 23c) in einem computerimplementierten Container enthalten sind.

11. Verfahren nach Anspruch 9 oder 10, bei dem das erste Teilsystem (2, 3, 4) und das zweite Teilsystem (2, 3, 4) mittels einer expliziten Synchronisationsverbindung, die eine Datenverbindung ist, die ausschließlich für einen Datenverkehr zwischen den beiden Teilsystemen verwendet wird, und das zweite Teilsystem (2, 3, 4) und das dritte Teilsystem (2, 3, 4) mittels einer impliziten Synchronisationsverbindung, die eine Datenverbindung ist, die nicht ausschließlich für einen Datenverkehr zwischen den beiden Teilsystemen verwendet wird, miteinander verbunden sind.

12. Verfahren nach Anspruch 9 oder 10, bei dem das erste Teilsystem (2, 3, 4), das zweite Teilsystem (2, 3, 4) und das dritte Teilsystem (2, 3, 4) mittels einer multiplen, expliziten Synchronisationsverbindung miteinander verbunden sind.

13. Verfahren nach einem der Ansprüche 9 bis 12, bei dem die multiple, explizite Synchronisationsverbindung wenigstens einen Netzwerkswitch (27) umfasst und auf einem Ethernet-Protokoll basiert.

14. Verfahren nach einem der Ansprüche 9 bis 13, bei dem das Ablaufprogramm zusätzlich wenigstens ein drittes Teilprogramm (16a, 16b, 16c, 18a, 18b, 18c, 20a, 20b, 20c) aufweist, und bei dem der Datenspeicher zusätzlich wenigstens einen dritten Teilspeicher (21a, 21b, 21c, 22a, 22b, 22c, 23a, 23b, 23c) aufweist, wobei das Automatisierungssystem das dritte Teilprogramm (16a, 16b, 16c, 18a, 18b, 18c, 20a, 20b, 20c) und den dritten Teilspeicher (21a, 21b, 21c, 22a, 22b, 22c, 23a, 23b, 23c) zwischen dem zweiten Teilsystem (2, 3, 4) und dem dritten Teilsystem (2, 3, 4) synchronisiert.

15. Verfahren nach einem der Ansprüche 9 bis 14, bei dem die einzelnen Teilsysteme dazu ausgebildet sind, einen jeweiligen Synchronisationspartner zur Synchronisierung eines Teilprogramms (16a, 16b, 16c, 18a, 18b, 18c, 20a, 20b, 20c) und eines dazugehörigen Teilspeichers (21a, 21b, 21c, 22a, 22b, 22c, 23a, 23b, 23c) anhand eines Gütekriteriums variabel zu bestimmen.

## Claims

1. Redundantly designed automation system (1), which has at least a first subsystem (2), at least a second subsystem (3) and at least a third subsystem (4),
wherein a sequence program is implemented in the subsystems (2, 3, 4) of the automation system (1) in each case, which can be executed in a runtime environment (15, 17, 19) in order to fulfil automation tasks,
and wherein a data memory is implemented in the subsystems (2, 3, 4) of the automation system (1) in each case,
wherein the sequence program has at least a first subprogram (16a, 16b, 16c, 18a, 18b, 18c, 20a, 20b, 20c) and a second subprogram (16a, 16b, 16c, 18a, 18b, 18c, 20a, 20b, 20c),
and wherein the data memory in each case has at least one first submemory (21a, 21b, 21c, 22a, 22b, 22c, 23a, 23b, 23c) and a second submemory (21a, 21b, 21c, 22a, 22b, 22c, 23a, 23b, 23c), wherein
the first submemory (21a, 21b, 21c, 22a, 22b, 22c, 23a, 23b, 23c) is assigned to the first subprogram (16a, 16b, 16c, 18a, 18b, 18c, 20a, 20b, 20c) and the second submemory (21a, 21b, 21c, 22a, 22b, 22c, 23a, 23b, 23c) is assigned to the second subprogram (16a, 16b, 16c, 18a, 18b, 18c, 20a, 20b, 20c),
and wherein the automation system is designed to synchronise the first subprogram (16a, 16b, 16c, 18a, 18b, 18c, 20a, 20b, 20c) of the first subsystem (2) with the first subprogram (16a, 16b, 16c, 18a, 18b, 18c, 20a, 20b, 20c) of the second subsystem (3) with a first synchronisation clock and to synchronise the first submemory (21a, 21b, 21c, 22a, 22b, 22c, 23a, 23b, 23c) of the first subsystem (2) with the first submemory (21a, 21b, 21c, 22a, 22b, 22c, 23a, 23b, 23c) of the second subsystem (3) with the first synchronisation clock, and to synchronise the second subprogram (16a, 16b, 16c, 18a, 18b, 18c, 20a, 20b, 20c) of the first subsystem (2) with the second subprogram (16a, 16b, 16c, 18a, 18b, 18c, 20a, 20b, 20c) of the third subsystem (4) with a second synchronisation clock, and to synchronise the second submemory (21a, 21b, 21c, 22a, 22b, 22c, 23a, 23b, 23c) of the first subsystem (2) with the second submemory (21a, 21b, 21c, 22a, 22b, 22c, 23a, 23b, 23c) of the third subsystem (4) with the second synchronisation clock, wherein the first synchronisation clock and the second synchronisation clock differ from one another.

2. Redundantly designed automation system (1) according to claim 1, in which in each case a subprogram (16a, 16b, 16c, 18a, 18b, 18c, 20a, 20b, 20c) and a submemory (21a, 21b, 21c, 22a, 22b, 22c, 23a, 23b, 23c) assigned to the subprogram (16a, 16b, 16c, 18a, 18b, 18c, 20a, 20b, 20c) are contained in a computer-implemented container.

3. Redundantly designed automation system (1) according to claim 1 or 2, in which the first subsystem (2, 3, 4) and the second subsystem (2, 3, 4) are connected to one another by means of an explicit synchronisation link, which is a data link used exclusively for data traffic between the two subsystems, and the first subsystem (2, 3, 4) and the second subsystem (2, 3, 4) are connected to one another by means of an implicit synchronisation link which is a data link which is not used exclusively for data traffic between the two subsystems.

4. Redundantly designed automation system (1) according to one of the preceding claims, in which the first subsystem (2, 3, 4), the second subsystem (2, 3, 4) and the third subsystem (2, 3, 4) are connected to one another by means of a multiple, explicit synchronisation link.

5. Redundantly designed automation system (1) according to claim 4, in which the multiple, explicit synchronisation link comprises at least one network switch (27) and is based on an Ethernet protocol.

6. Redundantly designed automation system (1) according to one of the preceding claims, in which the sequence program additionally has at least one third subprogram (16a, 16b, 16c, 18a, 18b, 18c, 20a, 20b, 20c) and in which the data memory additionally has at least one third submemory (21a, 21b, 21c, 22a, 22b, 22c, 23a, 23b, 23c), wherein the automation system is designed to synchronise the third subprogram (16a, 16b, 16c, 18a, 18b, 18c, 20a, 20b, 20c) and the third submemory (21a, 21b, 21c, 22a, 22b, 22c, 23a, 23b, 23c) between the second subsystem (2, 3, 4) and the third subsystem (2, 3, 4).

7. Redundantly designed automation system (1) according to one of the preceding claims, in which at least one of the subsystems (2, 3, 4) is cloud-based.

8. Redundantly designed automation system (1) according to one of the preceding claims, in which the individual subsystems (2, 3, 4) are embodied to dynamically determine a respective synchronisation partner for synchronising a subprogram and an associated submemory (21a, 21b, 21c, 22a, 22b, 22c, 23a, 23b, 23c) on the basis of a quality criterion.

9. Method for operating a redundantly designed automation system (1), which has at least one first subsystem (2, 3, 4), at least one second subsystem (2, 3, 4) and at least one third subsystem (2, 3, 4),
wherein a sequence program is implemented in the subsystems (2, 3, 4) of the automation system (1) in each case, which can be executed in a runtime environment (15, 17, 19) in order to fulfil automation tasks,
and wherein a data memory is implemented in the subsystems (2, 3, 4) of the automation system (1) in each case,
wherein the sequence program has at least one first subprogram (16a, 16b, 16c, 18a, 18b, 18c, 20a, 20b, 20c) and one second subprogram (16a, 16b, 16c, 18a, 18b, 18c, 20a, 20b, 20c),
and wherein the data memory has at least one first submemory (21a, 21b, 21c, 22a, 22b, 22c, 23a, 23b, 23c) and one second submemory (21a, 21b, 21c, 22a, 22b, 22c, 23a, 23b, 23c) in each case,
wherein the first subprogram (16a, 16b, 16c, 18a, 18b, 18c, 20a, 20b, 20c) of the first subsystem (2) with the first subprogram (16a, 16b, 16c, 18a, 18b, 18c, 20a, 20b, 20c) of the second subsystem (3) is synchronised with a first synchronisation clock, and the first submemory (21a, 21b, 21c, 22a, 22b, 22c, 23a, 23b, 23c) of the first subsystem (2) with the first submemory (21a, 21b, 21c, 22a, 22b, 22c, 23a, 23b, 23c) of the second subsystem (3) is synchronised with the first synchronisation clock and the second subprogram (16a, 16b, 16c, 18a, 18b, 18c, 20a, 20b, 20c) of the first subsystem (2) with the second subprogram (16a, 16b, 16c, 18a, 18b, 18c, 20a, 20b, 20c) of the third subsystem (4) is synchronised with a second synchronisation clock, and the second submemory (21a, 21b, 21c, 22a, 22b, 22c, 23a, 23b, 23c) of the first subsystem (2) with the second submemory (21a, 21b, 21c, 22a, 22b, 22c, 23a, 23b, 23c) of the third subsystem (4) is synchronised with the second synchronisation clock, wherein the first synchronisation clock and the second synchronisation clock differ from one another.

10. Method according to claim 9, in which in each case a subprogram (16a, 16b, 16c, 18a, 18b, 18c, 20a, 20b, 20c) and a submemory (21a, 21b, 21c, 22a, 22b, 22c, 23a, 23b, 23c) assigned to the subprogram (16a, 16b, 16c, 18a, 18b, 18c, 20a, 20b, 20c) are contained in a computer-implemented container.

11. Method according to claim 9 or 10, in which the first subsystem (2, 3, 4) and the second subsystem (2, 3, 4) are connected to one another by means of an explicit synchronisation link which is a data link used exclusively for data traffic between the two subsystems and the second subsystem (2, 3, 4) and the third subsystem (2, 3, 4) are connected to one another by means of an implicit synchronisation link which is a data link which is not used exclusively for data traffic between the two subsystems.

12. Method according to claim 9 or 10, in which the first subsystem (2, 3, 4), the second subsystem (2, 3, 4) and the third subsystem (2, 3, 4) are connected to one another by means of a multiple, explicit synchronization link.

13. Method according to one of claims 9 to 12, in which the multiple, explicit synchronization link comprises at least one network switch (27) and is based on an Ethernet protocol.

14. Method according to one of claims 9 to 13, in which the sequence program additionally has at least one third subprogram (16a, 16b, 16c, 18a, 18b, 18c, 20a, 20b, 20c) and in which the data memory additionally has at least one third submemory (21a, 21b, 21c, 22a, 22b, 22c, 23a, 23b, 23c), wherein the automation system synchronizes the third subprogram (16a, 16b, 16c, 18a, 18b, 18c, 20a, 20b, 20c) and the third submemory (21a, 21b, 21c, 22a, 22b, 22c, 23a, 23b, 23c) between the second subsystem (2, 3, 4) and the third subsystem (2, 3, 4).

15. Method according to one of claims 9 to 14, in which the individual subsystems are embodied to dynamically determine a respective synchronization partner for synchronizing a subprogram (16a, 16b, 16c, 18a, 18b, 18c, 20a, 20b, 20c) and an associated submemory (21a, 21b, 21c, 22a, 22b, 22c, 23a, 23b, 23c) on the basis of a quality criterion.

## Revendications

1. Système (1) d'automatisation, qui est conçu de manière redondante et qui a au moins un système (2) partiel, au moins un deuxième système (3) partiel et au moins un troisième système (4) partiel,
dans lequel dans les systèmes (2, 3, 4) partiels du système (1) d'automatisation est mis en oeuvre respectivement un programme de déroulement, qui peut être réalisé dans un environnement (15, 17, 19) de durée d'exécution pour remplir des tâches d'automatisation, et dans lequel une mémoire de données est mise en oeuvre respectivement dans les systèmes (2, 3, 4) partiels du système (1) d'automatisation,
dans lequel le programme de déroulement a au moins un premier programme (16a, 16b, 16c, 18a, 18b, 18c, 20a, 20b, 20c) partiel et un deuxième programme (16a, 16b, 16c, 18a, 18b, 18c, 20a, 20b, 20c) partiel,
et dans lequel la mémoire de données a respectivement au moins une première mémoire (21a, 21b, 21c, 22a, 22b, 22c, 23a, 23b, 23c) partielle et une deuxième mémoire (21a, 21b, 21c, 22a, 22b, 22c, 23a, 23b, 23c) partielle, dans lequel
au premier programme (16a, 16b, 16c, 18a, 18b, 18c, 20a, 20b, 20c) partiel est affectée la première mémoire (21a, 21b, 21c, 22a, 22b, 22c, 23a, 23b, 23c) partielle et au deuxième programme (16a, 16b, 16c, 18a, 18b, 18c, 20a, 20b, 20c) partiel est affectée la deuxième mémoire (21a, 21b, 21c, 22a, 22b, 22c, 23a, 23b, 23c) partielle, et dans lequel le système d'automatisation est conçu pour synchroniser par une première cadence de synchronisation le premier programme (16a, 16b, 16c, 18a, 18b, 18c, 20a, 20b, 20c) partiel du premier système (2) partiel avec le premier programme (16a, 16b, 16c, 18a, 18b, 18c, 20a, 20b, 20c) partiel du deuxième système (3) partiel, et pour synchroniser, par la première cadence de synchronisation, la première mémoire (21a, 21b, 21c, 22a, 22b, 22c, 23a, 23b, 23c) partielle du premier système (2) partiel avec la première mémoire (21a, 21b, 21c, 22a, 22b, 22c, 23a, 23b, 23c) partielle du deuxième système (3) partiel, et pour synchroniser, par une deuxième cadence de synchronisation, le deuxième programme (16a, 16b, 16c, 18a, 18b, 18c, 20a, 20b, 20c) partiel du premier système (2) partiel avec le deuxième programme (16a, 16b, 16c, 18a, 18b, 18c, 20a, 20b, 20c) partiel du troisième système (4) partiel, et pour synchroniser, par la deuxième cadence de synchronisation, la deuxième mémoire (21a, 21b, 21c, 22a, 22b, 22c, 23a, 23b, 23c) partielle du premier système (2) partiel avec la deuxième mémoire (21a, 21b, 21c, 22a, 22b, 22c, 23a, 23b, 23c) partielle du troisième système (4) partiel, la première cadence de synchronisation et la deuxième cadence de synchronisation étant différentes l'une de l'autre.

2. Système (1) d'automatisation conçu de manière redondante suivant la revendication 1, dans lequel respectivement un programme (16a, 16b, 16c, 18a, 18b, 18c, 20a, 20b, 20c) partiel et une mémoire (21a, 21b, 21c, 22a, 22b, 22c, 23a, 23b, 23c) partielle associés au programme (16a, 16b, 16c, 18a, 18b, 18c, 20a, 20b, 20c) partiel sont contenus dans un conteneur mis en oeuvre par ordinateur.

3. Système (1) d'automatisation conçu de manière redondante suivant la revendication 1 ou 2, dans lequel le premier système (2, 3, 4) partiel et le deuxième système (2, 3, 4) partiel sont reliés entre eux au moyen d'une liaison de synchronisation explicite, qui est une liaison de données, qui est utilisée exclusivement pour un trafic de données entre les deux systèmes partiels, et le premier système (2, 3, 4) partiels et le deuxième système (2, 3, 4) partiels sont reliés entre eux au moyen d'une liaison de synchronisation implicite, qui est une liaison de données, qui n'est pas utilisée exclusivement pour un trafic de données entre les deux systèmes partiels.

4. Système (1) d'automatisation conçu de manière redondante suivant l'une des revendications précédentes, dans lequel le premier système (2, 3, 4) partiel, le deuxième système (2, 3, 4) partiel et le troisième système (2, 3, 4) partiels sont reliés entre eux au moyen d'une liaison de synchronisation multiple explicite.

5. Système (1) d'automatisation conçu de manière redondante suivant la revendication 4, dans lequel la liaison de synchronisation multiple explicite comprend au moins un interrupteur (27) de réseau et est basée sur un protocole Ethernet.

6. Système (1) d'automatisation conçu de manière redondante suivant l'une des revendications précédentes, dans lequel le programme de déroulement a supplémentairement au moins un troisième programme (16a, 16b, 16c, 18a, 18b, 18c, 20a, 20b, 20c) partiel, et dans lequel la mémoire de données a supplémentairement au moins une troisième mémoire (21a, 21b, 21c, 22a, 22b, 22c, 23a, 23b, 23c) partielle, dans lequel le système d'automatisation est conçu pour synchroniser le troisième programme (16a, 16b, 16c, 18a, 18b, 18c, 20a, 20b, 20c) partiel et la troisième mémoire (21a, 21b, 21c, 22a, 22b, 22c, 23a, 23b, 23c) partielle entre le deuxième système (2, 3, 4) partiel et le troisième système (2, 3, 4) partiel.

7. Système (1) d'automatisation conçu de manière redondante suivant l'une des revendications précédentes, dans lequel au moins l'un des systèmes (2, 3, 4) partiels est à base d'un nuage.

8. Système (1) d'automatisation conçu de manière redondante suivant l'une des revendications précédentes, dans lequel les divers systèmes (2, 3, 4) partiels sont constitués pour définir, de manière variable, à l'aide d'un critère de qualité, un partenaire respectif de synchronisation pour la synchronisation d'un programme partiel et d'une mémoire (21a, 21b, 21c, 22a, 22b, 22c, 23a, 23b, 23c) partielle, qui lui appartient.

9. Procédé pour faire fonctionner un système (1) d'automatisation conçu de manière redondante, qui a au moins un premier système (2, 3, 4) partiel, au moins un deuxième système (2, 3, 4) partiel et au moins un troisième système (2, 3, 4) partiel,
dans lequel dans les systèmes (2, 3, 4) partiels du système (1) d'automatisation est mis en oeuvre respectivement un programme de déroulement, qui peut être réalisé dans un environnement (15, 17, 19) de durée d'exécution pour remplir des tâches d'automatisation, et dans lequel une mémoire de données est mise en oeuvre respectivement dans les systèmes (2, 3, 4) partiels du système (1) d'automatisation,
dans lequel le programme de déroulement a au moins un premier programme (16a, 16b, 16c, 18a, 18b, 18c, 20a, 20b, 20c) partiel et un deuxième programme (16a, 16b, 16c, 18a, 18b, 18c, 20a, 20b, 20c) partiel,
et dans lequel la mémoire de données a respectivement au moins une première mémoire (21a, 21b, 21c, 22a, 22b, 22c, 23a, 23b, 23c) partielle et une deuxième mémoire (21a, 21b, 21c, 22a, 22b, 22c, 23a, 23b, 23c) partielle,
dans lequel on synchronise, par une première cadence de synchronisation, le premier programme (16a, 16b, 16c, 18a, 18b, 18c, 20a, 20b, 20c) partiel du premier système (2) partiel avec le premier programme (16a, 16b, 16c, 18a, 18b, 18c, 20a, 20b, 20c) partiel du deuxième système (3) partiel et on synchronise, par la première cadence de synchronisation, la première mémoire (21a, 21b, 21c, 22a, 22b, 22c, 23a, 23b, 23c) partielle du premier système (2) partiel avec la première mémoire (21a, 21b, 21c, 22a, 22b, 22c, 23a, 23b, 23c) partielle du deuxième système (3) partiel, et on synchronise, par une deuxième cadence de synchronisation, le deuxième programme (16a, 16b, 16c, 18a, 18b, 18c, 20a, 20b, 20c) partiel avec le deuxième système (2) partiel avec le deuxième programme (16a, 16b, 16c, 18a, 18b, 18c, 20a, 20b, 20c) partiel du troisième système (4) partiel, et on synchronise, par la deuxième cadence de synchronisation, la deuxième mémoire (21a, 21b, 21c, 22a, 22b, 22c, 23a, 23b, 23c) partielle du deuxième système (2) partiel avec la deuxième mémoire (21a, 21b, 21c, 22a, 22b, 22c, 23a, 23b, 23c) partielle du troisième système (4) partiel, dans lequel la première cadence de synchronisation et la deuxième cadence de synchronisation sont différentes l'une de l'autre.

10. Procédé suivant la revendication 9, dans lequel respectivement un programme (16a, 16b, 16c, 18a, 18b, 18c, 20a, 20b, 20c) partiel et une mémoire (21a, 21b, 21c, 22a, 22b, 22c, 23a, 23b, 23c) partielle associés au programme (16a, 16b, 16c, 18a, 18b, 18c, 20a, 20b, 20c) partiel sont contenus dans un conteneur mis en oeuvre par ordinateur.

11. Procédé suivant la revendication 9 ou 10, dans lequel le premier système (2, 3, 4) partiel et le deuxième système (2, 3, 4) partiel sont reliés entre eux au moyen d'une liaison de synchronisation explicite, qui est une liaison de données, qui est utilisée exclusivement pour un trafic de données entre les deux systèmes partiels, et le premier système (2, 3, 4) partiel et le troisième système (2, 3, 4) partiel sont reliés entre eux au moyen d'une liaison de synchronisation implicite, qui est une liaison de données, qui n'est pas utilisée exclusivement pour un trafic de données entre les deux systèmes partiels.

12. Procédé suivant la revendication 9 ou 10, dans lequel le premier système (2, 3, 4) partiel, le deuxième système (2, 3, 4) partiel et le troisième système (2, 3, 4) partiel sont reliés entre eux au moyen d'une liaison de synchronisation multiple explicite.

13. Procédé suivant l'une des revendications 9 à 12, dans lequel la liaison de synchronisation multiple explicite comprend au moins un interrupteur (27) de réseau et est basée sur un protocole Ethernet.

14. Procédé suivant l'une des revendications 9 à 13, dans lequel le programme de déroulement a supplémentairement au moins un troisième programme (16a, 16b, 16c, 18a, 18b, 18c, 20a, 20b, 20c) partiel, et dans lequel la mémoire de données a supplémentairement au moins une troisième mémoire (21a, 21b, 21c, 22a, 22b, 22c, 23a, 23b, 23c) partielle, dans lequel le système d'automatisation synchronise le troisième programme (16a, 16b, 16c, 18a, 18b, 18c, 20a, 20b, 20c) partiel et la troisième mémoire (21a, 21b, 21c, 22a, 22b, 22c, 23a, 23b, 23c) partielle entre le deuxième système (2, 3, 4) partiel et le troisième système (2, 3, 4) partiel.

15. Procédé suivant l'une des revendications 9 à 14, dans lequel les divers systèmes partiels sont constitués pour définir, de manière variable, à l'aide d'un critère de qualité, un partenaire respectif de synchronisation pour la synchronisation d'un programme (16a, 16b, 16c, 18a, 18b, 18c, 20a, 20b, 20c) partiel et d'une mémoire (21a, 21b, 21c, 22a, 22b, 22c, 23a, 23b, 23c) partielle, qui lui appartient.
